# EUROPEAN PATENT SPECIFICATION

(11) **EP 1 721 783 B1**
(45) Date of publication and mention of the grant of the patent: **03.06.2009**
(21) Application number: 05256456.4
(22) Date of filing: 18.10.2005
(51) Int. Cl.: B60R 11/02

(54) **Suction fixture**
Saughalter
Dispositif de retenue à ventouse

(30) Priority: 12.05.2005 CN 200520058216
(43) Date of publication of application: 15.11.2006
(73) Proprietor: Silicon Pyramid Electron Ltd., Guangzhou (CN)
(72) Inventor: Hsiung, Chen Kuo, Guangzhou (CN)
(74) Representative: Piésold, Alexander James

(56) References cited:
- DE-U1- 20 316 061
- DE-U1-2202005 000 07
- US-A1- 2004 242 285
- US-A1- 2005 045 794
- US-A1- 2005 157 869

## Description

The invention relates to an assembly for affixing a portable electronic product to a stationary object, particularly one that employs suction to hold it in place.

Portable visual electronic products are becoming ever more diversified, including such devices as a PDA, pocket TV and palmtop audio visual recorder player (like an MP4). These devices are light and compact, have become very popular and have found wide applications in various vehicles, such as automobiles, airplanes and ships. Such units make our life more enjoyable either on trips or at work. However, such products presently have to be held in a user's hands. This is very inconvenient for extended use or when the user's hands are needed for other purposes. In addition, the products may fall out of the user's hands and get damaged. There is therefore a need for a fixture assembly that can easily fix any portable visual electronic product to a stationary support, especially on a moving vehicle.

US 2004/0242285 A discloses a mobile phone support apparatus having a support member attached to and supported by a windscreen mounting member via a spacing rod. The windscreen mounting member is a single suction fixture having a single suction pad.

At least in its preferred embodiments the present invention provides a simple, reliable and easy to use fixture which is free from the present technical defects. The fixture employs suction to hold the portable visual electronic products in position.

Viewed from one aspect, the invention provides a suction fixture assembly for a portable electronic product comprising a fixing base for supporting the electronic product; a flexible supporting rod connected to the fixing base at one end thereof and suction means connected to the other end for securing the portable electronic product to a stationary object, characterised in that separate suction means are provided on opposite sides of the supporting rod and are hinged to each other.

Thus the suction components can be hinged to each other at different angles to fit with suction surfaces of different radius.

The suction component preferably includes a suction body suction piece, connecting rod and toggle switch. The connecting rod preferably passes through the suction body and is connected to the suction piece at one end and to the toggle switch at the other. The toggle switch is preferably also contact connected to the suction body. If the suction body is made of soft materials (like rubber or plastic), a rigid piece (metal) can be set between the toggle switch and the suction body to make the contact surface with the toggle switch more rigid.

The suction body is preferably concave and evenly edged. The elastic suction piece preferably has one side joined to the suction body and the other smooth side is preferably applied against the object to which it is to be connected.

The connecting rod can be embedded into or adhered to the suction piece, and hinged to the toggle switch. Specifically, at the adjoining ends of both the connecting rod and toggle switch holes are preferably provided, into which studs are inserted to connect the connecting rod with the toggle switch.

The toggle switch preferably has different configurations along its end to be connected to the suction body. These configurations are preferably located at different distances from the hinging hole of the toggle switch. By adjusting the different configurations of the toggle switch to be contact connected to the suction body, it is possible to change the position of the connecting rod relative to the toggle switch. This adjusts the deformation extent of the suction piece, and thus the suction force.

The connecting rod preferably has a coaxial spring located inside the suction body. The spring is preferably contact connected at one end to the end of the connecting rod (or suction piece) and its other end to the inner side of the suction body. The spring helps restore the suction piece and connecting rod.

The supporting rod preferably includes a freely bendable internal rod and an external sleeve, with the internal rod socketed into the external sleeve. The internal rod can be made of easily foldable metal that can be bent and fixed as desired.

The fixing base preferably consists of a base body and a movable clamping piece. The base body preferably has a clamping flange, and the movable clamping piece is preferably screwed together with the portable visual electronic product. At the back of the movable clamping piece there is preferably a clamping block, through which the movable clamping piece and base body are clamped into the clamping flange.

The base body of the fixing base preferably has an elastic stopper. The stopper is preferably located at one end of the clamping flange and can be locked after the movable clamping piece is clamped into the clamping base so as to prevent the portable visual electronic product from slipping.

In use the suction fixture adheres firmly to a smooth surface (like a wall or the glass of your car) through the suction component at one end of the fixture. The portable visual electronic product is connected to the fixing base at the other end of the suction fixture. The supporting rod is then adjusted to give the portable visual electronic product a desired visual angle.

This fixture is superior to the existing technologies in that it is safe and can be used to fix a portable visual electronic product stably and reliably to enable a user to enjoy programs without holding it with their hands. They no longer have to worry about their visual product falling out of their hands. Therefore, this novel device provides convenience and safety at the same time. This suction fixture can adhere to a flat or arcuate surface. It enables a user to flexibly and easily adjust the visual direction and angle of their visual products. It applies to common vehicles like various automobiles. This device is applicable to fixing all existing portable visual electronic products, such as PDA, pocket TV, palmtop audio visual recorder player and portable DVD players in a stable position in a moving vehicle.

A preferred embodiment will now be described by way of example only, and with reference to the accompanying drawings, in which:
Figure 1 shows a perspective view of a suction fixture according to the invention;
Figure 2 shows an exploded perspective view of the suction fixture shown in Figure 1;
Figure 3 shows a fixture as shown in Figure 2 from another angle; and
Figure 4 shows the suction fixture of Figure 1 in its use position.

The fixture according to the invention will be exemplified and illustrated in more detail below, but it has more applications than are described here.

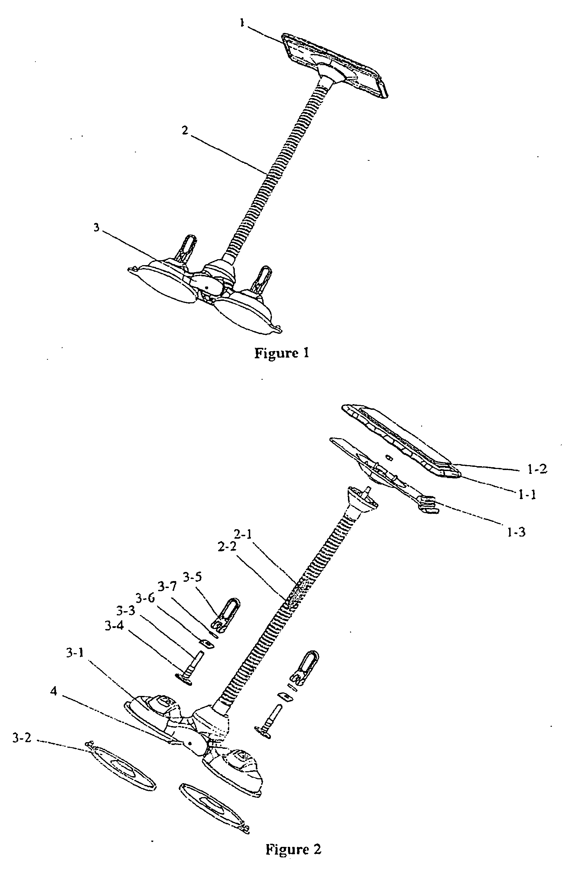

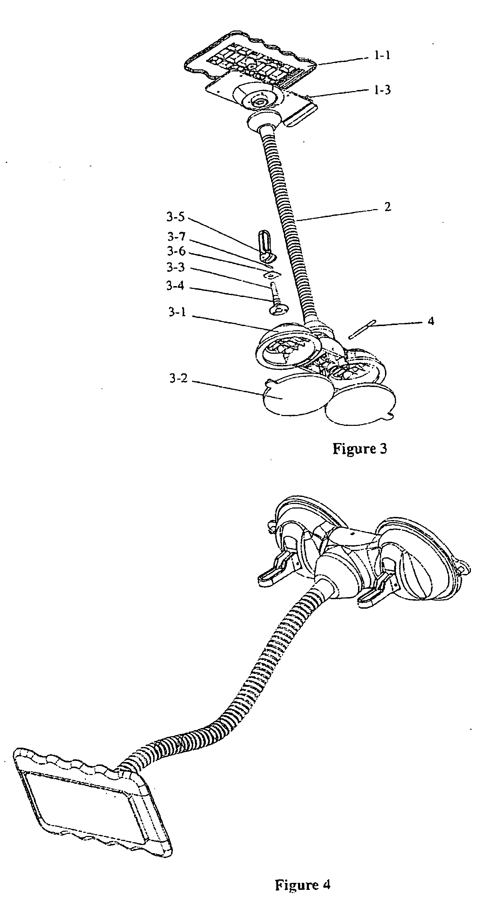

Figure 1 shows the outline of the suction fixture. It may be seen from Figure 1 that the suction fixture is composed of a fixing base 1, a supporting rod 2 and a suction component 3. The suction component 3 is connected to the fixing base 1 via the supporting rod 2. The specific structures of respective parts are shown in Figures 2 and 3.

From Figures 2 and 3 it can be seen that first and second groups of suction components 3 are symmetrically set on the opposite sides of the supporting rod 2. These groups are hinged to each other via a stud 4 so they can be set at different angles to fit with suction surfaces of different radii. Each suction component group 3 includes a suction body 3-1, suction piece 3-2, connecting rod 3-3, spring 3-4, and toggle switch 3-5. The connecting rod 3-3 passes through the suction body 3-1, and is connected to the suction piece 3-2 at one end and to the toggle switch 3-5 at the other. The toggle switch 3-5 is pivotally connected to the suction body 3 -1. The connecting rod 3-3 has a coaxial spring 3-4 that is located inside the suction body 3 - 1. The spring 3-4 is contact-connected at one end to the end of the connection rod 3-3 (or suction piece 3-2) and at its other end to the inner side of the suction body 3-1. The spring 3-4 thus helps restore the suction piece 3-2 and connecting rod 3-3 when the toggle switch is released.

A rigid (metal) piece 3-6 is set between the toggle switch 3-5 and the suction body 3-1 and is concave and evenly edged. The suction piece 3-2 is elastic, usually made of rubber or plastic, with one side joined to the suction body 3-1 and the other smooth side sucking the target object in use.

The connecting rod 3-3 is embedded into the suction body 3-1, and hinged to the toggle switch 3-5 at the adjoining ends of both the connecting rod 3 -3 and toggle switch 3-5. The toggle switch 3-5 has different configurations at the end to be connected to the suction body 3-1, and those configurations are at different distances from the hinging hole of the toggle switch 3-5. Thus by adjusting the different configurations of the toggle switch 3-5 to be connected to the suction body 3 -1, it is possible to change the position of the connecting rod 3-3 and thus adjust the deformation extent of the suction piece 3-2, to adjust the suction force. The supporting rod 2 includes a freely bendable internal rod 2-1 and an external sleeve 2-2. The internal rod 2-1 can be made of easily foldable metal that can be bent and fixed as desired. The fixing base 1 consists of the base body 1-1 and a movable clamping piece connected to the portable visual electronic product, (not shown in the figures). The base body has a clamping flange 1-2, and the movable clamping piece is screwed together with the portable visual electronic product in use.

At the back of the movable clamping piece is a clamping block (not shown), through which the movable clamping piece and base body 1-1 are clamped into the clamping flange 1-2. The base body 1-1 of the fixing base 1 has an elastic stopper 1-3, which is located at one end of the clamping flange 1-2 and can be locked after the movable clamping piece is clamped into the base body 1-1 so as to prevent the portable visual electronic product from slipping.

The new suction fixture works as follows:

One end of the suction component 3 of the suction fixture is fixed to a smooth surface and the elastic suction piece 3-2 can adhere to the target suction surface. The toggle switch 3-5 is turned down to overcome the action of the spring 3-4 and lift the connecting rod 3-3. At the same time, the connecting rod 3 -3 lifts the elastic suction piece 3-2 connected to it, forming a vacuum between the middle of the elastic suction piece 3-2 and the target suction surface. In this way, the suction component 3 may adhere firmly to the target surface. The portable visual electronic product is fixed to the fixing base 1, and then one can adjust the supporting rod 2 to give the portable visual electronic product a desired visual angle, as shown in Figure 4.

It is intended to cover by the appended claims all embodiments and modifications that fall within the true scope of the invention.

## Claims

1. A suction fixture assembly for a portable electronic product comprising a fixing base (1) for supporting the electronic product; a flexible supporting rod (2) connected to the fixing base at one end thereof and suction means (3) connected to the other end for securing the portable electronic product to a stationary object, **characterised in that** separate suction means (3) are provided on opposite sides of the supporting rod (2) and are hinged to each other.

2. A suction fixture as claimed in claim 1, wherein the suction means (3) include a suction body (3-1), a suction piece (3-2) to be connected to a stationary object, a connecting rod (3-3) extending through said suction body and connected at one end to the suction piece and at its other end to a toggle switch (3-5) connected to said suction body for controlling the amount of retraction or lifting of said suction piece to regulate the suction securing the portable electronic product to a stationary object in use.

3. A suction fixture as claimed in claim 2, wherein the suction piece (3-2) is elastic and the inner side thereof is connected to said suction body (3-1) and the outer side is smooth for affixing the fixture to a suitable target suction surface or stationary object.

4. A suction fixture as claimed in claim 2 or 3, wherein one end of the connecting rod (3-3) is adhered to said suction piece (3-2) and its other end is hinged to the toggle switch (3-5).

5. A suction fixture as claimed in claim 2, 3 or 4, wherein the toggle switch (3-5) defines a varying configuration on its outer surface, the different configurations being located at different distances from where the toggle switch is hinged to the connecting rod (3-3) whereby the suction force created by the suction fixture is varied depending on the portion of the outer surface of the toggle switch which is in contact with the suction body.

6. A suction fixture as claimed in any of claims 2 to 5, further comprising a coaxial spring (3-4) extending around said connecting rod (3-3), one end of the spring being connected to the connecting rod and its other end being connected to the suction body (3-1) to help restore the suction piece and connecting rod to their normal position when the toggle switch is released.

7. A suction fixture as claimed in any preceding claim, wherein the flexible supporting rod (2) consists of a freely bendable internal rod (2-1) and an external sleeve (2-2) with the internal rod socketed into the external sleeve.

8. A suction fixture as claimed in any preceding claim, wherein the fixing base (1) consists of a base body (1-1) and a moveable clamping piece, wherein the said base body has a clamping flange (1-2) and the said moveable clamping piece is screwed together with the portable visual electronic product in use, said moveable clamping piece including a clamping block at its back through which the moveable clamping piece and base body are clamped into the clamping flange.

9. A suction fixture as claimed in claim 8, wherein the base body (1-1) also includes an elastic stopper (1-3) located at one end of the clamping flange (1-2).

## Patentansprüche

1. Saughalterungsanordnung für ein tragbares elektronisches Produkt mit einer Halterungsbasis (1) zum Tragen des elektronischen Produkts, einer flexiblen Haltestange (2), die mit der Halterungsbasis an einem Ende verbunden ist, und Saugmitteln (3), die mit dem anderen Ende zum Sichern bzw. Befestigen des tragbaren elektronischen Produkts an einem stationären Objekt verbunden sind, **dadurch gekennzeichnet, dass** separate Saugmittel (3) an gegenüberliegenden Seiten der Haltestange (2) bereitgestellt und mit dem jeweils anderen gelenk- bzw. scharnierartig verbunden sind.

2. Saughalterung nach Anspruch 1, bei der die Saugmittel (3) einen Saugkörper (3-1), ein Saugstück (3-2), das mit einem stationären Objekt verbunden werden soll, eine Verbindungsstange (3-3) aufweisen, die sich durch den Saugkörper (3-1) erstreckt und an einem Ende mit dem Saugstück und an ihrem anderen Ende mit einem Kipphebel (3-5) verbunden ist, der mit dem Saugkörper zum Steuern der Menge der Abstellung oder Anhebung des Saugstückes verbunden ist, um die Saugwirkung zu regulieren, die das tragbare elektronische Produkt an einem stationären Objekt während der Verwendung befestigt.

3. Saughalterung nach Anspruch 2, bei der das Saugstück (3-2) elastisch ausgebildet ist und seine innere Seite mit dem Saugkörper (3-1) verbunden ist und die äußere Seite glatt bzw. geschmeidig ist zum Befestigen der befestigung an einer geeigneten Zielsaugfläche oder einem stationären Objekt.

4. Saughalterung nach Anspruch 2 oder 3, bei der ein Ende der Verbindungsstange (3-3) an dem Saugstück (3-2) befestigt ist und ihr anderes Ende gelenk- bzw. scharnierartig an dem Kipphebel (3-5) angebracht ist.

5. Saughalterung nach Anspruch 2, 3 oder 4, bei der der Kipphebel (3-5) eine variierende Konfiguration an seiner äußeren Oberfläche definiert, wobei die unterschiedlichen Konfigurationen an unterschiedlichen Abständen von der Stelle angeordnet sind, an der der Kipphebel scharnierartig mit der Verbindungsstange (3-3) verbunden ist, wodurch die Saugkraft, die von der Saugbefestigung erzeugt wird, abhängig von dem Anteil der äußeren Oberfläche des Kipphebels, welcher in Kontakt mit dem Saugkörper steht, variiert.

6. Saughalterung nach einem der Ansprüche 2 bis 5, ferner mit einer koaxialen Feder (3-4), welche sich um die Verbindungsstange (3-3) erstreckt, wobei ein Ende der Feder mit der Verbindungsstange verbunden ist und ihr anderes Ende mit dem Saugkörper (3-1) verbunden ist, um die Wiederherstellung bzw. den Rückgang des Saugstücks und der Verbindungsstange in ihre normale Position zu unterstützen, wenn der Kipphebel gelöst wird.

7. Saughalterung nach einem der vorstehenden Ansprüche, wobei die flexible Haltestange (2) eine frei biegbare innere Stange (2-1) und eine äußere Hülse (2-2) aufweist, wobei die innere Stange in der äußeren Hülse gesockelt ist.

8. Saughalterung nach einem der vorstehenden Ansprüche, bei der die Haltebasis (1) einen Basiskörper (1-1) und ein bewegbares Klemmstück aufweist, wobei der Basiskörper einen Klemmflansch (1-2) aufweist und das bewegbare Klemmstück mit dem tragbaren sichtbaren elektronischen Produkt bei der Verwendung verschraubt ist, wobei das bewegbare Klemmstück einen Klemmblock an seiner Rückseite aufweist, durch welchen das bewegbare Klemmstück und der Basiskörper in den Klemmflansch eingeklemmt sind.

9. Saughalterung nach Anspruch 8, bei der der Basiskörper (1-1) auch ein elastisches Stoppelement (1-3) aufweist, das an einem Ende des Klemmflansch (1-2) angeordnet ist.

## Revendications

1. Dispositif de montage d'aspiration pour produit électronique portable, comprenant une base de montage (1) conçue pour supporter un produit électronique ; une tige de support flexible (2) raccordée à la base de montage à l'une des extrémités et des moyens d'aspiration (3) raccordés à l'autre extrémité pour fixer le produit électronique portable à un objet stationnaire, **caractérisé par le fait que** des moyens d'aspiration séparés (3) sont prévus sur les côtés opposés de la tige de support (2) et sont encharnés l'un à l'autre.

2. Dispositif de fixation d'aspiration comme revendiqué dans la revendication 1, dans lequel les moyens d'aspiration (3) comprennent un corps d'aspiration (3-1), une pièce d'aspiration (3-2) à raccorder à un objet stationnaire, une tige de raccordement (3-3) se prolongeant dans ledit corps d'aspiration et raccordée par une extrémité à la pièce d'aspiration et par l'autre extrémité à un interrupteur à bascule (3-5) raccordé au dit corps d'aspiration pour contrôler la quantité de rétraction ou le soulèvement de ladite pièce d'aspiration pour réguler l'aspiration fixant le produit électronique portable à l'objet stationnaire utilisé.

3. Dispositif de fixation d'aspiration comme revendiqué dans la revendication 2, dans lequel la pièce d'aspiration (3-2) est élastique et son côté intérieur est raccordé au dit corps d'aspiration (3-1) et le côté extérieur est lisse pour appliquer le dispositif de fixation sur une aspiration cible adéquate, sur une surface ou sur un objet stationnaire.

4. Dispositif de fixation d'aspiration comme revendiqué dans la revendication 2 ou 3, dans lequel l'une des extrémités de la tige de raccordement (3-3) adhère à ladite pièce d'aspiration (3-2) et l'autre extrémité est encharnée avec le commutateur à bascule (3-5).

5. Dispositif de fixation d'aspiration comme revendiqué dans les revendications 2, 3 ou 4, dans lequel le commutateur à bascule (3-5) définit une configuration changeante sur sa surface extérieure, les différentes configurations se situant à des distances différentes de l'endroit où le commutateur à bascule est encharné avec la tige de raccordement (3-3), ce qui permet de faire varier la force d'aspiration créée par le dispositif de fixation d'aspiration en fonction de la partie de la surface éxtérieure du commutateur à bascule qui est en contact avec le corps d'aspiration.

6. Dispositif de fixation d'aspiration comme revendiqué dans l'une quelconque des revendications 2 à 5, comprenant également un ressort coaxial (3-4) se prolongeant autour de ladite tige de raccordement (3-3), l'une des extrémités du ressort étant raccordée à la tige de raccordement et l'autre extrémité étant raccordée au corps d'aspiration (3-1) pour aider la pièce d'aspiration et la tige de raccordement à revenir à leur position normale lorsque le commutateur à bascule est débrayé.

7. Dispositif de fixation d'aspiration comme revendiqué dans l'une quelconque des revendications précédentes, dans lequel la tige de support flexible (2) consiste en une tige intérieure librement cintrable (2-1) et en un manchon extérieur (2-2) avec la tige intérieure enchâssée dans le manchon extérieur.

8. Dispositif de fixation d'aspiration comme revendiqué dans l'une quelconque des revendications précédentes, dans lequel la base de fixation (1) consiste en un corps de base (1-1) et en une pièce de serrage mobile, dans lequel ledit corps de base est doté d'une bride de serrage (1-2) et ladite pièce de serrage mobile est vissée avec le produit électronique visuel portable utilisé, ladite pièce de serrage mobile comprenant sur sa partie arrière un bloc de serrage à travers lequel la pièce de serrage mobile et le corps de base sont serrés dans la bride de serrage.

9. Dispositif de fixation d'aspiration comme revendiqué dans la revendication 8, dans lequel le corps de base (1-1) comprend également une butée élastique (1-3) située sur une extrémité de la bride de serrage (1-2).
